# EUROPÄISCHE PATENTSCHRIFT

(11) **EP 2 963 998 B1**
(45) Veröffentlichungstag und Bekanntmachung des Hinweises auf die Patenterteilung: **20.05.2020**
(21) Anmeldenummer: 15173613.9
(22) Anmeldetag: 04.11.2009
(51) Int. Cl.: H05B 45/50, H05B 45/14, H05B 45/382, H05B 47/18

(54) **LEUCHTMITTEL-BETRIEBSGERÄT MIT POTENTIALTRENNUNG**
LUMINOUS ELEMENT OPERATING DEVICE WITH ISOLATION
APPAREIL D'EXPLOITATION DE MOYENS D'ÉCLAIRAGE AVEC SÉPARATION DE POTENTIEL

(30) Priorität: 05.11.2008 DE 102008055862
(43) Veröffentlichungstag der Anmeldung: 06.01.2016
(62) Teilanmeldung aus: 09744976.3
(73) Patentinhaber: Tridonic GmbH & Co KG, 6851 Dornbirn (AT)
(72) Erfinder: Barth, Alexander, 6861 Alberschwende (AT)
(74) Vertreter: Rupp, Christian

(56) Entgegenhaltungen:
- WO-A2-2005/122423
- WO-A2-2008/116042
- DE-A1-102006 028 670
- US-A1- 2008 018 261

## Beschreibung

Die vorliegende Erfindung bezieht sich auf das Gebiet der Betriebsgeräte für Leuchtmittel, insbesondere auf das Gebiet der Betriebsgeräte für organische und anorganische Leuchtdioden (LEDs) öder Gasentladungslampen.

Es ist bereits bekannt, dass Betriebsgerät für Leuchtmittel eine galvanische Trennung zwischen einem Niederspannungsbereich und einem Hochspannungsbereich des Geräts aufweisen. Dabei sind insbesondere zweistufige Betriebsgeräte bekannt, wobei ein Wandler (Konverter), der die Leuchtmittel versorgt, unter Potentialtrennung über eine Steuerschaltung auf der Netzspannungsseite (Primärseite der Potentialtrennung) angesteuert. Falls Rückführsignale von der Sekundärseite der Potentialtrennung, also insbesondere aus dem Bereich der Leuchtmittel zu der Steuerschaltung zurückgeführt werden sollen, ist für diese Rückführung ebenfalls eine Potentialtrennung vorgesehen. Die Ansteuerung auf der Sekundärseite der Potentialtrennung erfolgt durch eine weitere Steuerschaltung, die eine von der erstgenannten, auf Netzspannungspotential liegenden Steuerschaltung getrennt ist.

Aus der US 2008/0018261 A1 ist eine LED-Spannungsversorgung mit Dimmmöglichkeit vorgesehen. Dabei liegt ein PFC mit Steuer-IC vor sowie ein Flyback-Konverter. Die beiden Stufen sind voneinander galvanisch getrennt. Die Informationen können über einen Optokoppler dem Steuer-IC der zweiten Stufen zugeführt werden.

Der vorliegenden Erfindung liegt nunmehr die Aufgabe zugrunde, eine Schaltung insbesondere zum Betrieb von organischen und anorganischen LEDs vorzuschlagen.

Diese Aufgabe wird durch die Merkmale des unabhängigen Anspruchs gelöst. Vorteilhafte Weiterbildungen der Erfindung sind Gegenstand der Unteransprüche.

Weitere Merkmale und Vorteile der Erfindung werden deutlich beim Lesen der folgenden Beschreibung bevorzugter Ausführungsformen, die auf die Zeichnung Bezug nimmt.
- Fig. 1: zeigt eine schematische Ansicht des Betriebsgeräts für Leuchtmittel gemäß einem Ausführungsbeispiel der vorliegenden Erfindung, bei dem ein erster Wandler als Sperrwandler ausgebildet ist,
- Fig. 2: zeigt eine Abwandlung des in Fig. 1 gezeigten Ausführungsbeispiels dahingehend, dass der erste Wandler als Vorwärtswandler ausgebildet ist,
- Fig. 3: zeigt eine Ausführungsform, bei der ein zweiter Wandler als Buck-Boost-Konverter ausgebildet ist,
- Fig. 4: zeigt ein nichterfindungsgemäßes Beispiel, und
- Fig. 5: zeigt ein weiteres nichterfindungsgemäßes Beispiel.

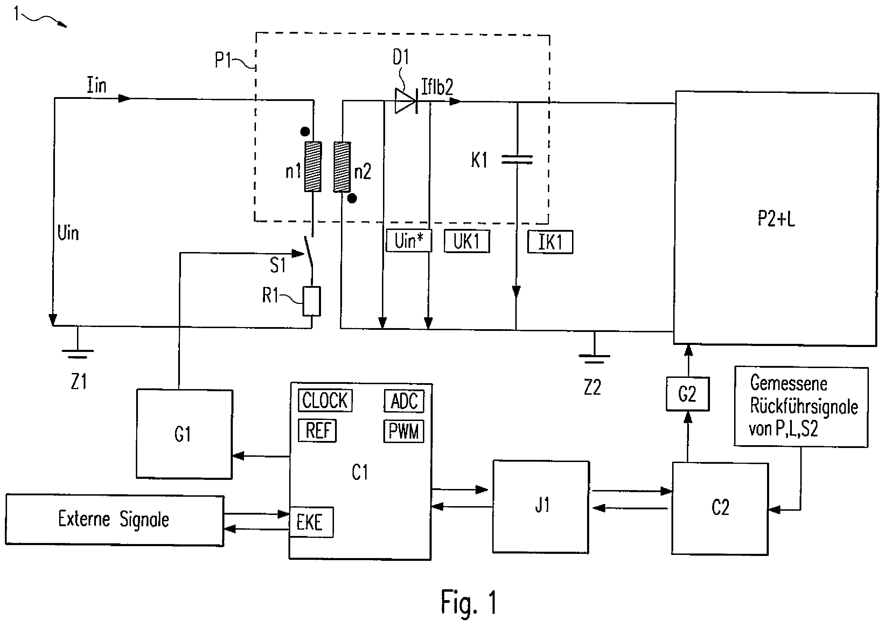

Das in Fig. 1 dargestellte und allgemein mit dem Bezugszeichen 1 versehene Betriebsgerät für Leuchtmittel ist ein erstes Ausführungsbeispiel gemäß der Erfindung.

Das Betriebsgerät 1 ist vorzugsweise zum Betreiben einer LED bzw. einer Mehrzahl von LEDs vorgesehen. Das Betriebsgerät 1 ist eingangsseitig an ein Stromversorgungsnetz angeschlossen, welches eine Netzversorgungsspannung Uin und einen Netzversorgungsstrom Iin zur Verfügung stellt.

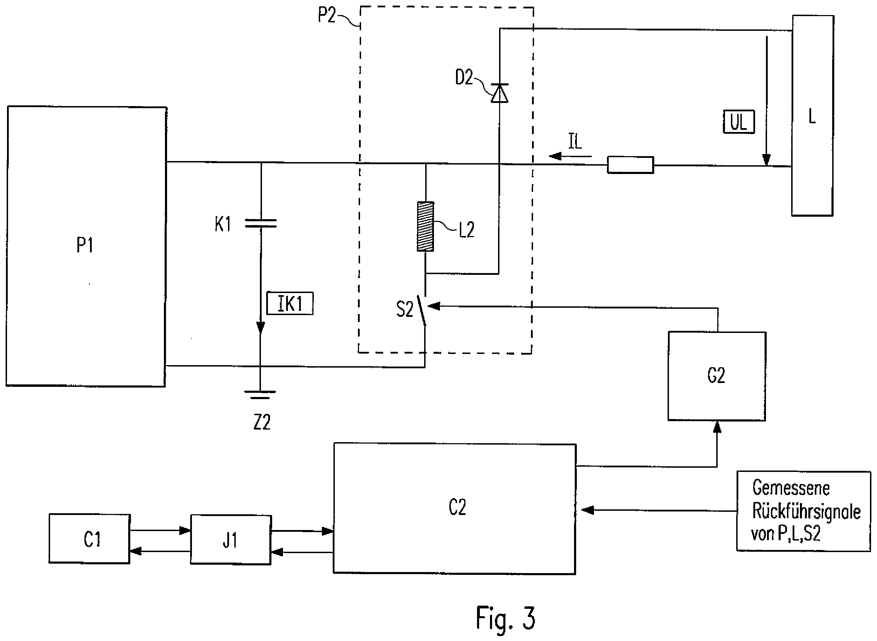

Wie auf Fig. 1 dargestellt weist das Betriebsgerät 1 unter anderem einen ersten Wandler bzw. eine erste Leistungswandlungsstufe P1 und einen zweiten Wandler P2, der einen Lastkreis L mit einem oder mehreren Leuchtmitteln vorzugsweise LEDs versorgt. Der erste Wandler P1 hat ein Bezugspotential Z1 und der zweite Wandler P2 ein Bezugspotential Z2. Eine besondere Ausführungsform des zweiten Wandlers P2 wird in Fig. 3 gezeigt.

Der Wandler P1 ist im dargestellten ersten Ausführungsbeispiel durch einen sog. isolierten Sperrwandler oder Flyback-Konverter gebildet, der einen Transformator mit einer Primärwicklung n1 und einer Sekundärwicklung n2 aufweist. In bekannter Weise kann durch ein entsprechendes abwechselndes Öffnen und Schließen eines steuerbaren Schalters S1 die von der Netzversorgungs-Spannung Uin zur Verfügung gestellte Energie auf die Sekundärseite des Wandlers P1 übertragen und zum Versorgen des zweiten Wandlers P2 genutzt werden. Der Schalter S1 kann z.B. als Transistor bzw. als MOSFET-Transistor ausgeführt werden. Die Energieübertragung findet dabei im geöffneten Zustand des Schalters S1 statt, wobei hierzu auf der Ausgangsseite des isolierten Sperrwandlers P1 ferner eine Diode D1 vorgesehen ist.

Eine auf Fig. 1 mit C1 beizeichnete erste Logikschaltung steuert auf der Primärseite des ersten Wandlers P1 und über einen Treiber G1 den Schalter S1 an. Der Schalter S1 wird in bekannter Art und Weise von dieser Logikschaltung C1 angesteuert, bspw. mittels PWM (Pulsweitenmodulation)-Signalen.

Auf der Primärseite des ersten Wandlers P1, d.h. an der Wicklung n1, liegt also die Netzspannung Uin, die ausgangsseitig in eine Spannung Uin* umgewandelt wird. Über eine Diode D1 bildet sich ein Strom Iflb2 der ein Energiespeicherelement K1 auflädt, an dem sich eine Spannung UK1 einstellt. Dieses Energiespeicherelement K1 kann beispielsweise einen Kondensator bspw. einen Elektrolytkondensator oder eine Batterie sein. Die Benutzung einer Batterie wird unten näher erläutert. Somit stellt sich an dem Energiespeicherelement K1 eine stabilisierte Zwischenspannung UK1 ein, ausgehend von der die zweite Wandlerstufe P2 und der Lastkreis L bzw. die Leuchtmittel gespeist werden können.

Wie bereits erwähnt, ist zwischen der in Fig. 1 gezeigte vorzugsweise digitale Logikschaltung C1 und dem Schalter S1 ein Treiber G1 vorgesehen. Alternativ oder zusätzlich dazu kann die Logikschaltung auch einen internen Treiber (nicht gezeigt) aufweisen.

Wie in Fig. 1 ersichtlich, ist die vorzugsweise digital integrierte Logikschaltung C1 dazu ausgebildet, externe Signale entgegenzunehmen bzw. beispielsweise über eine angeschlossene Busleitung (nicht gezeigt) Signale auszugeben. Bei diesen Signalen handelt es sich um Befehle (wie beispielsweise Ein- oder Ausschaltbefehle bzw. Dimmwert-Vorgaben) oder Statusinformation (insbesondere die Information bzgl. eines Netzspannungsausfalls im Falle der Anwendung der Erfindung auf Notbeleuchtungen).

Demzufolge ist eine Einheit EKE zur externen bidirektionaler Kommunikation in der ersten Logikschaltung C1 vorgesehen. Diese Einheit EDE kann speziell dazu ausgebildet sein, ein Steuerprotokoll zur Steuerung digitaler lichttechnischer Betriebsgeräte, wie bspw. das DALI Protokoll (Digital Addressable Lighting Interface) zu unterstützen.

Die erste Logikschaltung C1 kann auch dazu ausgebildet sein, Rückführsignale von der Primärseite des ersten Wandlers P1 zu erfassen (in Fig. 1 nicht gezeigt). Insbesondere kann die Eingangsspannung Uin oder, mittels eines in Serie zum Schalter S1 geschalteten Mess-Widerstands R1, auch der Strom durch den Schalter S1 von der ersten Logikschaltung C1 erfasst und ermittelt werden.

Zusätzlich zur ersten Logikschaltung C1 ist auch eine zweite Logikschaltung C2 auf der entkoppelten Sekundärseite vorgesehen. Diese weitere Logikschaltung C2 ist dazu vorgesehen, Rückführsignale von der Sekundärseite zu erfassen und aktive Elemente auf der Sekundärseite (Schalter etc.) vorzugsweise über einen Treiber G2 anzusteuern. Die Rückführsignale können dabei insbesondere aus dem Bereich des Lastkreises L, dem Bereich eines weiteren Schalters zum Steuern des zweiten Wandlers P2, dem Bereich des zweiten Wandlers P2 oder der Sekundärseite des Wandlers P1 (bspw. die Spannung Uin*) stammen.

Bei der Erfassung solcher Rückführsignale ist vorzugsweise keine galvanische Trennung erforderlich, da diese Rückführsignale auf dem gleichen Bezugspotential liegen, wie die Logikschaltung C2.

Zu der Logikschaltung C2 werden Rückführungssignale zurückgeführt, die als Istwerte zur Regelung des Leuchtmittelbetriebs ausgewertet werden.

Die beiden Logikschaltungen C1, C2 sind über ein Potentialtrennungs-Interface bzw. eine Schnittstelle J1 miteinander verbunden. Das erfindungsgemäße Betriebsgerät 1 weist also zwei Logikschaltungen C1, C2 auf, die über die Schnittstelle J1 potential oder galvanisch getrennt sind. Somit kann eine vollständige galvanische Entkopplung zwischen der Sekundärseite und der mit Netzspannung versorgten Primärseite der Betriebsschaltung bzw. Treiberschaltung 1 gewährleistet werden.

Diese Schnittstelle J1 ist vorzugsweise bidirektional. Entsprechend können Signale von der ersten Logikschaltung C1 zu der zweiten Logikschaltung C2 übertragen werden, d.h. die zweite Logikschaltung C2 kann dann aktive Elemente auf der Sekundärseite abhängig von der ersten Logikschaltung C1 zugeführten externen Befehlen ansteuern. Signale können aber auch in umgekehrter Richtung zwischen den Logikschaltungen C1, C2 über die Schnittstelle J1 übertragen werden. Als Beispiel dafür können von der zweiten Logikschaltung C2 erfassten Rückführsignale über die Schnittstelle J1 und über die erste Logikschaltung C1 als Statusinformation extern weitergegeben werden.

Es können über die potentialgetrennte Schnittstelle J1 verschiedene Informationen übermittelt werden, wie bspw. Messwerte, Zustände und/oder Steuersignale. Die Information kann asynchron übermittelt werden. Vorzugsweise wird aber ein Multiplexverfahren benutzt, um mehrere Messwerte, Zustände oder Steuersignale gleichzeitig über den jeweiligen physikalischen Kanal zwischen Schnittstelle J1 und Logikschaltung C1, C2 übertragen zu können.

Gemäß bevorzugten Ausführungsformen der Erfindung können die Logikschaltungen C1, C2 als IC (Integrierter Schaltkreis) oder ASIC (Anwendungsspezifische Integrierte Schaltung, engl. "application specific integrated circuit"), insbesondere als Digitalschaltung ausgebildet sein.

Gemäß weiteren bevorzugten Ausführungsformen sind die Logikschaltungen C1, C2 und die Schnittstelle J1 in einem IC integriert (bspw. in einem "multi chip module"). Die Schnittstelle J1 kann bspw. mittels integrierter Luftspule in einem derartigen IC integriert werden. Eine Luftspule ermöglicht hochfrequente Übertragungen zwischen den Logikschaltungen C1, C2.

Wahlweise können auch die Treiber G1 und/ oder G2 in den IC integriert werden. Die Übertragung über die Schnittstelle J1 kann mittels hochfrequenter Übertragung erfolgen (beispielsweise im MHz- oder GHz-Bereich).

Indessen kann die potentialtrennende Schnittstelle J1 auch als externer Transformator (vorzugsweise ohne Kern) ausgebildet sein.

Weiterhin ist auch ein Piezo-Transformator als potentialtrennende Schnittstelle J1 einsetzbar. Bei einem derartigen Piezo-Transformator wird die Kopplung der Primär- und Sekundärseite rein mechanisch herbeigeführt.

Jede Logikschaltung C1, C2 kann einen Taktgeber CLOCK, einen Analog/Digital-Wandler ADC, Referenzspannungen REF und einen PWM-Treiber aufweisen. Über den Taktgeber CLOCK werden die Komponenten der jeweiligen Logikschaltung C1, C2 synchronisiert. Die Logikschaltungen C1, C2 können über eine externe Spannungsversorgung mit einer Betriebsspannung versorgt werden oder diese intern generieren.

Innerhalb der Logikschaltung C1 bzw. C2 sind mehrere Analog/Digital-Wandler ADC für die Rückführsignale sowie einen digital arbeitenden Regelkreis angeordnet. Der Regelkreis ist dabei für das Ansteuern und Takten des jeweiligen angeschlossenen Wandlers P1 bzw. P2 zuständig. Dieses Ansteuern und Takten erfolgt vorzugsweise mittels des PWM-Treibers über PWM-Signale.

Diese Komponenten sind nicht zwingend in beiden Logikschaltungen vorgesehen. Vielmehr kann die Struktur einer der beiden Logikschaltungen C1, C2 sehr stark reduziert werden. Das Minimum bzw. die Kernfunktion, die jede Logikschaltung C1, C2 zu erledigen im Stande sein muss, ist, die üblicherweise hochfrequenzmodulierte Übertragung über die Schnittstelle J1 dekodieren bzw. kodieren zu können. Alle anderen Komponenten oder Regelungsalgorithmen bspw. zur Auswertung von Messsignalen können in einer der beiden Logikschaltungen C1, C2 konzentriert sein. Speicher können auch auf einer der beiden Seiten C1, C2 konzentriert sein.

Erfindungsgemäß kommuniziert auch nur eine der beiden Logikschaltungen C1, C2 extern. Dementsprechend weist nur die erste Logikschaltung C1 die Einheit EKE zur externen bidirektionaler Kommunikation. Diese externe Kommunikationseinheit EKE kann beispielsweise über einen angeschlossenen Bus (nicht gezeigt) zum Empfang von Steuersignalen oder zur Ausgabe von Rückmeldungen oder Statussignalen über den Bus dienen.

Die Leistungswandlerstufe P1 kann in unterschiedlicher Weise ausgeführt werden. Außer als isolierter Sperrwandler wie in Fig. 1 gezeigt, kann sie bspw. als Vorwärtswandler oder auch als andere potentialgetrennnte Konverterschaltungen ausgebildet sein.

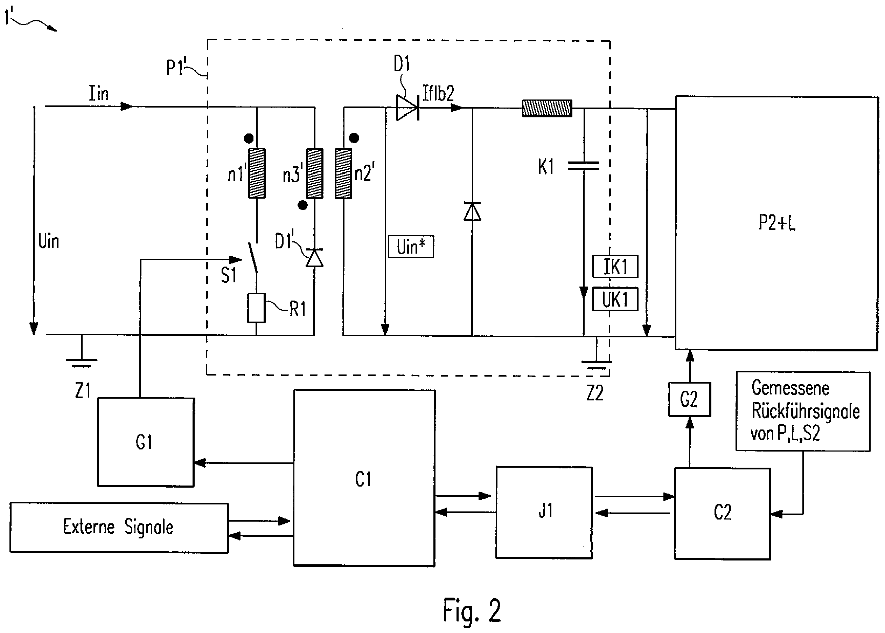

Unter Bezugnahme auf Fig. 2 wird ein weiteres Betriebsgerät 1' gemäß der Erfindung erläutert. Dieses Ausführungsbeispiel unterscheidet sich insofern vom ersten, dass die erste Wandlerstufe P1' als Vorwärtswandler ausgeführt ist. Dieser Vorwärtswandler P1' ist besonders für den kontinuierlichen Betrieb (continuous mode) ausgelegt.

Beim Wandler P1' ist also wiederum ein Transformator mit Wicklungen n1', n2' primärseitig über den Schalter S1 getaktet. Die beiden Wicklungen n1' und n2' sind gleichsinnig gewickelt, so dass die Übertragung von Energie immer dann erfolgt, wenn der Schalter S1 angesteuert durch die Logikschaltung C1 eingeschaltet ist.

Dazu ist primärseitig noch eine dritte Wicklung n3' vorgesehen, zu der in Serie eine Diode D1' geschaltet ist, und wobei die Wicklung der dritten Spule n3' gegensinnig zu den ersten Spulen n1' und n2' ist. Diese Spule n3' dient dazu, die Magnetisierung der primärseitigen Spule n1' abzubauen.

Fig. 3 zeigt nunmehr detailliert eine mögliche Ausgestaltung des zweiten Wandlers P2, die sich sowohl mit einem isolierten Sperrwandler P1 gemäß Fig. 1 oder mit einem Vorwärtswandler P1' 2 gemäß Fig. 2 kombinieren lässt.

Der zweite Wandler P2 kann bspw. als Sperrwandler oder Schaltregler ausgeführt werden. Der zweite Wandler P2 weist einen steuerbaren Schalter S2 in Serie mit einer Induktivität L2 sowie eine Diode D2 auf.

Durch alternierendes Ansteuern des Schalters S2 durch die Logikschaltung C2 über einen Treiber G2 wird auf diese Weise der LED-Anordnung ein Strom zur Verfügung gestellt, über welchen diese betrieben wird. Durch Wahl der Frequenz und/oder des Tastverhältnisses der Ansteuerung des Schalters S2 lässt sich somit die Spannung an dem Energiespeicherelement K1 in eine für den Betrieb der Leuchtmittel geeignete Spannung herauf- oder herabsetzen.

Der Treiber G2 kann wahlweise in der Logikschaltung C2 integriert sein oder als eigene Einheit ausgebildet sein.

Für die Steuerung des Schalters S2 durch die Logikschaltung C2 ist keine galvanische Trennung notwendig. Ebenso ohne galvanische Trennung erfolgt die Steuerung des Schalters S1 durch die erste Logikschaltung C1. Mit anderen Worten werden die Schalter S1, S2 ohne Potentialtrennung von den Logikschaltungen C1, C2 gesteuert.

Mögliche Rückführsignale auf der Sekundärseite sind der Spannungsabfall UL über der LED-Anordnung sowie der Strom IL durch die LED-Anordnung und der Strom durch den Schalter S2.

Durch Ansteuerung des Schalters S2 auf der Sekundärseite wird, beispielsweise über PWM-Modulation, ein Dimmen erreicht.

Die Erfindung ist nicht nur auf die dargestellte Ausführungsbeispiele beschränkt. Denkbar ist es auch, dass es sich bspw. beim ersten Wandler P1 um einen freischwingenden Sperrwandler handelt. Insgesamt ist erfindungsgemäß also nur ein Schalter entweder auf der Primärseite oder der Sekundärseite notwendig. Die Erfindung umfasst entsprechend auch Ausführungsformen, bei denen kein Schalter zum Steuern des ersten Wandlers P1, P1' oder des zweiten Wandlers P2 vorliegt. Bei solchen Variante wird nur auf einer Potentialseite der Schalter S1, S2 angesteuert.

Es wird nunmehr die Notbeleuchtung als typisches Anwendungsbeispiel der Erfindung näher erläutert.

Bei der Gestaltung als Notlichtbeleuchtung ist das Energiespeicherelement K1 eine Batterie, die ausgehend von dem isolierten Sperrwandler oder Vorwärtswandler geladen werden kann und im Notlichtfall die Leuchtmittelanordnung versorgt.

In einer Benutzung als Notbeleuchtung kann die sekundärseitige Netzspannung zur Erkennung des Notlichtfalls von der zweiten Logikschaltung C2 überwacht werden. Die zweite Logikschaltung C2 kann dabei auch andere Betriebsparameter der Sekundärseite des Notlichtgeräts erfassen.

Während eines Ladebetriebs als Notlichtgerät ist üblicherweise ausschließlich der erste Wandler P1 aktiv, um die Batterie dauerhaft aufzuladen. Erst für den Fall, dass ein Notzustand vorliegt, der insbesondere durch Abweichungen der in Fig. 1 und 2 gezeigten sekundärseitigen Netzversorgungsspannung Uin* von vorbestimmten Soll-Werten gekennzeichnet ist, wird ein Notlichtbetrieb eingeleitet.

Alternativ dazu und statt die Netzspannung indirekt über die sekundärseitige Netzversorgungsspannung Uin* zu überwachen, kann die Überwachung der Netzspannung auch primärseitig erfolgen. Es ist in dem Fall die erste Logikschaltung C1, die direkt die Netzspannung Uin erfasst.

Im Notlichtbetrieb wird dann der zweite Schalter S2 alternativ ein- und ausgeschaltet. Das Tastverhältnis des Ein- und Ausschaltens wird von der Logikschaltung C2 entsprechend angepasst, um die Höhe des der LED zugeführten Stroms und damit die Leistung, bei welcher die LED betrieben wird, einzustellen.

Die Ansteuerung der Last L und der Batteriemanagement werden also sekundärseitig durchgeführt, während die Steuerung der Batterieladung primärseitig erledigt wird. Die Überwachung der Netzspannung kann wie bereits erwähnt primär- oder sekundärseitig durchgeführt werden.

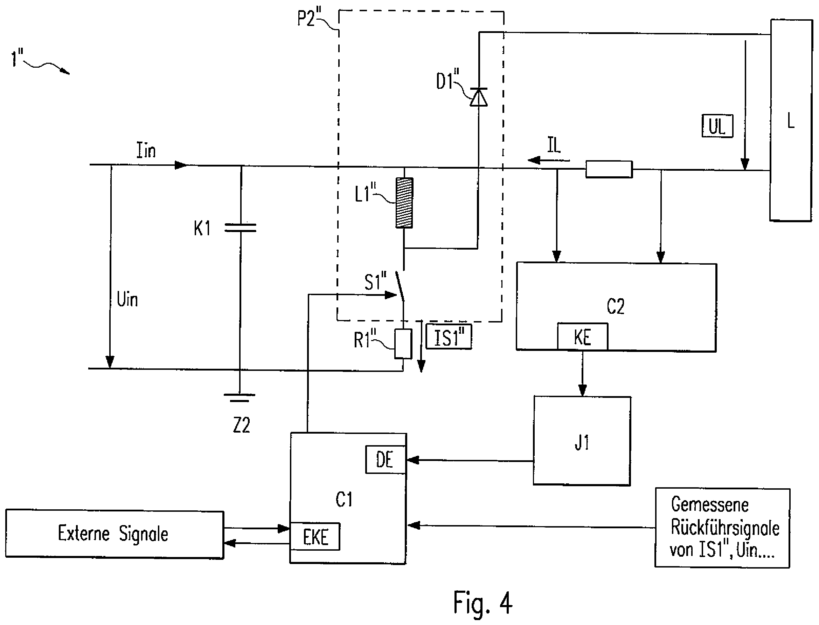

Fig. 4 zeigt nunmehr ein nichterfindungsgemäßes Beispiel eines Betriebsgeräts 1".

Das Betriebsgerät 1" unterscheidet sich dadurch von den Ausführungsbeispielen der Erfindung, dass es nur einen Wandler P" aufweist. Die weiteren im Zusammenhang mit den ersten Ausführungsbeispielen aufgeführten Erläuterungen gelten entsprechend für dieses Ausführungsbeispiel des Betriebsgeräts 1".

Dieser Wandler P" kann als Leistungsfaktorkorrektur (PFC)-Schaltung ausgestaltet sein. Vorzugsweise ist der Wandler P" ein Wechselspannungs- / Gleichspannungs-Leistungswandler.

Die Eingangs-Netzwechselspannung Uin wird von einem Glättungskondensator K1 gesiebt und einer Induktivität L1", i.e. einer Spule, zugeführt. Die Induktivität L1" bildet mit einer Diode D1" eine Serienschaltung, die zwischen einem Eingangsanschluss, wo die Eingangs-Wechselspannung Uin anliegt, und einem Ausgangsanschluss, wo eine Ausgangs-Gleichspannung UL zum Versorgen des Lastkreises L bereitgestellt wird, geschaltet ist. An den Verbindungsknoten zwischen der Induktivität L1" und der Diode D1" ist ein steuerbarer Schalter S1" angeschlossen.

Ist der Schalter S1", eingeschaltet, so ist die Induktivität L1" gegen Masse kurzgeschlossen und die Diode D1" gesperrt. Die Induktivität L1" lädt sich entsprechend auf, so dass Energie in der Induktivität L1" gespeichert wird.

Ist dagegen der Schalter S1" ausgeschaltet, so ist die Diode D1" leitend, was dazu führt, dass die Induktivität L1" sich dann über die Diode D1" vorzugsweise in einen Gleichspannungskondensator (nicht gezeigt) entladen kann.

Der Schalter S1'' wird von der ersten Logikschaltung C1 in bekannter Art und Weise angesteuert. Der Logikschaltung C1 werden verschiedene Messsignale aus der Eingangsseite des Wandlers P1" zugeführt. Wie auf Fig. 4 dargestellt werden dabei insbesondere die eingangseitigen Messgrößen Netzeingangsspannung Uin und, über einen in Serie zum Schalter S1'' geschalteten Widerstand R1", Schalterstrom IS1" direkt der Logikschaltung C1 zugeführt.

Die zweite Logikschaltung C2 dient dazu, ausgangsseitige Rückführsignale zu messen. Im Ausführungsbeispiel der Fig. 4 wird der Strom IL durch den Lastkreis L bzw. durch die Leuchtmittelanordnung im Freilaufpfad erfasst.

Die von der ersten Logikschaltung C1 und von der zweiten Logikschaltung C2 erfassten Messwerte können im Übrigen auch Zustandssignale sein, die also vorzugsweise einen 1-Bit-Messwert darstellen.

Das in Fig. 4 gezeigte Betriebsgerät 1" stellt eine reduzierte Ausführungsform dahingehend dar, dass die Schnittstelle J1 unidirektional ausgeführt ist. Es handelt sich nur um eine potentialgetrennte Erfassung in diesem Fall des Stroms IL durch die LEDs. Die zweite Logikschaltung C2 kodiert mittels einer Kodiereinheit KE den erfassten Messwert zur Übertragung über die Schnittstelle J1. Die erste Logikschaltung umfasst eine entsprechende Dekodiereinheit DE zum Empfangen und Dekodieren der über die Schnittstelle J1 übertragene Signale.

Die zweite Logikschaltung C2 weist außer der Kodiereinheit KE vorzugsweise keine weitere Logik auf. Sämtliche weitere Logik, einschließlich der Einheit zur externen bidirektionalen Kommunikation EKE, ist in der Logikschaltung Cl konzentriert.

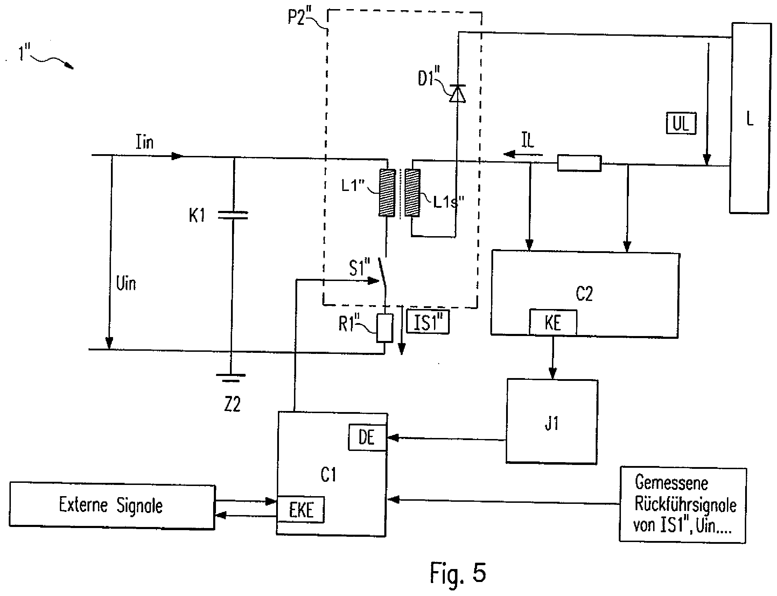

Die Schaltungsvariante nach Fig. 5 unterscheidet sich von der Ausführungsform nach Fig. 4 dadurch, dass die Induktivität L1" magnetisch mit einer Sekundärwicklung L1s" gekoppelt ist. Mit dieser Ausführungsform soll demonstriert werden, dass das in der Fig. 4 angewendete Sperrwandler-Prinzip für den Wandler P" nicht zwingend ist, sondern dass stattdessen auch ein anderes Schaltregler-Prinzip verwendet werden kann.

Die in Fig. 5 dargestellte Schaltungsvariante stellt ein nichterfindungsgemäßes Beispiel für ein isoliertes Sperrwandler-Prinzip dar. Es kann der Wandler P" aber beispielsweise auch durch eine resonante Halbbrücke mit einem Transformator zur Potentialtrennung gebildet werden.

Bei Anwendung eines isolierten Sperrwandler-Prinzips kann die Induktivität L1" durch eine Induktivität L1" mit einer magnetisch gekoppelten Sekundärwicklung L1s", die somit gemeinsam einen Transformator bilden, ersetzt werden. Die Sekundärwicklung L1s" kann dabei über eine Diode D1" und einen optionalen Ladekondensator C1" (parallel zu dem Lastkreis L, C1" ist nicht dargestellt) den Lastkreis L speisen. Die Induktivität L1" kann zusätzlich mit einer weiteren Auskoppelwicklung L13" magentisch gekoppelt sein (nicht dargestellt).

Dabei kann durch die erste Logikschaltung C1 beispielsweise in der Durchschaltphase des Schalters S1" als Istwert-Signal der Spannungsabfall über dem Widerstand R1" überwacht werden. In der Sperrphase kann beispielsweise durch die erste Logikschaltung C1 die Spannung über der Induktivität L1" und / oder der Nulldurchgang des Stromes durch die Induktivität L1" ermittelt werden. Beispielsweise kann ein Widerstand (nicht dargestellt) die Spannung an dem Verbindungspunkt zwischen der Induktivität L1" und dem Schalter S1'' abgreifen. Durch die zweite Logikschaltung C2 kann der Strom IL durch die LED an der Sekundärseite des Wandlers P1" abgegriffen werden und ein entsprechendes Signal über die Schnittstelle J1 an die erste Logikschaltung C1 übertragen werden.

Auf diese Weise lässt sich beispielsweise ein Betriebsgerät für eine LED auf eine sehr kompakte Weise aufbauen, so dass dieses Betriebsgerät aufgrund seiner kompakten Bauweise und der vorhandenen Potentialtrennung sehr gut in eine LED Lampe, also beispielsweise eine LED Lampe für den Ersatz einer konventionellen Glühlampe oder einer Energiesparlampe basierend auf einer Leuchtstofflampe, integrieren lässt. Dabei kann aufgrund der kompakten Bauform das Betriebsgerät sehr gut in dem Lampensockel der LED Lampe angeordnet werden.

Der Lampensockel der LED Lampe kann beispielsweise ein E27 Sockel, B22 Sockel, GU4 oder GU10 Sockel sein.

## Patentansprüche

1. Betriebsgerät zum Betreiben mindestens eines Leuchtmittels, insbesondere einer LED, wobei das Betriebsgerät aufweist:
• einen direkt oder indirekt mit Netzspannung (Uin) versorgten ersten Wandler (P1) mit einem ersten Bezugspotential (Z1), wobei der erste Wandler (P1) einen Transformator mit einer Primärwicklung (n1) und eine von der Primärwicklung (n1) galvanisch getrennte Sekundärwicklung (n2) aufweist, wobei mittels der Primärwicklung (n1) und der galvanisch getrennten Sekundärwicklung (n2) eine Potentialtrennung bereitgestellt wird,
• einen von der Primärwicklung (n1) des ersten Wandlers (P1) galvanisch getrennten und an die Sekundärwicklung (n2) angekoppelten zweiten Wandler (P2) mit einem zweiten Bezugspotential (Z2), wobei der zweite Wandler (P2) dazu ausgebildet ist einen Lastkreises (L) mit dem mindestens einen Leuchtmittel zu versorgen,
• eine erste Logikschaltung (C1) ausgebildet den ersten Wandler (P1) anzusteuern,
• eine zweite Logikschaltung (C2) ausgebildet einen Messwert auf einer Sekundärseite der Potentialtrennung zu erfassen, und
• eine potentialgetrennte Schnittstelle (J1), mittels der die erste Logikschaltung (C1) und die zweite Logikschaltung (C2) miteinander verbunden sind,
**dadurch gekennzeichnet, dass**
• die erste Logikschaltung (C1) dazu ausgebildet ist, über eine Kommunikationseinheit (EKE) einen digitalen Befehl zu empfangen und über die potentialgetrennte Schnittstelle (J1) an die zweite Logikschaltung (C2) zu übertragen, und
• die zweite Logikschaltung (C2) einen digitalen Regelkreis aufweist, der dazu ausgebildet ist basierend auf dem Messwert der Sekundärseite der Potentialtrennung den zweiten Wandler (P2) in einer Weise anzusteuern und zu takten, dass der Messwert auf einen dem der ersten Logikschaltung (C1) zugeführten digitalen Befehl entsprechenden Wert geregelt wird.

2. Betriebsgerät nach Anspruch 1, wobei die erste Logikschaltung (C1), die zweite Logikschaltung (C2) und die potentialgetrennte Schnittstelle (J1) in einem Multi-Chip-Modul integriert sind

3. Betriebsgerät nach Anspruch 1 oder 2,
wobei die zugeführten externen digitalen Befehle Dimmwert-Vorgaben sind.

4. LED Lampe, insbesondere LED Lampe für den Ersatz einer konventionellen Glühlampe,
aufweisend ein Betriebsgerät nach einem der vorhergehenden Ansprüche.

5. Leuchte, insbesondere Notlichtbeleuchtung,
aufweisend ein Betriebsgerät nach einem der vorhergehenden Ansprüche.

## Claims

1. An operating device for operating at least one lighting means, in particular, an LED, wherein the operating device has:
• a first converter (P₁) supplied directly or indirectly with mains voltage (Uin) with a first reference potential (Z₁), wherein the first converter (P₁) has a transformer with a primary winding (n₁) and a secondary winding (n₂) galvanically separated from the primary winding (n₁), wherein by means of the primary winding (n₁) and the galvanically separated secondary winding (n₂) a potential separation is provided,
• a second converter (P₂) galvanically separated from the primary winding (n₁) of the first converter (P₁) and coupled to the secondary winding (n₂) with a second reference potential (Z₂), wherein the second converter (P₂) is designed to supply a load circuit (L) with the at least one lighting means,
• a first logic circuit (C₁) designed to control the first converter (P₁),
• a second logic circuit (C₂) designed to detect a measured value on a secondary side of the potential separation, and
• a potential-separated interface (J₁), by means of which the first logic circuit (C₁) and the second logic circuit (C₂) are connected with one another, **characterized in that**
• the first logic circuit (C₁) is designed to receive a digital command via a communications unit (EKE) and to transmit it to the second logic circuit (C₂) via the potential-separated interface (J₁), and
• the second logic circuit (C₂) has a digital regulating circuit, which is designed to control and to clock the second converter (P₂) based on the measured value of the secondary side of the potential separation in such a manner that the measured value is regulated to a value corresponding to the digital command supplied to the first logic circuit (C₁).

2. The operating device according to Claim 1,
wherein the first logic circuit (C₁), the second logic circuit (C₂) and the potential-separated interface (J₁) are integrated in a multi-chip module.

3. The operating device according to Claim 1 or 2,
wherein the supplied external digital commands are dimming value specifications.

4. A lamp, in particular, an LED lamp for the replacement of a conventional incandescent lamp, having an operating device according to any one of the preceding claims.

5. A luminaire, in particular, an emergency light illumination, having an operating device according to any one of the preceding claims.

## Revendications

1. Appareil de commande pour la commande d'au moins un moyen d'éclairage, plus particulièrement d'une LED, dans lequel l'appareil de commande comprend :
• un premier convertisseur (P1) alimenté directement ou indirectement avec une alimentation réseau (Uin), avec un premier potentiel de référence (Z1), dans lequel le premier convertisseur (P1) comprend un transformateur avec un enroulement primaire (n1) et un enroulement secondaire (n2) isolé galvaniquement de l'enroulement primaire (n1), dans lequel une isolation de potentiel est mise à disposition au moyen de l'enroulement primaire (n1) et de l'enroulement secondaire (n2) isolé galvaniquement,
• un deuxième convertisseur (P2) isolé galvaniquement de l'enroulement primaire (n1) du premier convertisseur (P1) et couplé à l'enroulement secondaire (n2), avec un deuxième potentiel de référence (Z2), dans lequel le deuxième convertisseur (P2) est conçu pour alimenter un circuit de charge (L) avec l'au moins un moyen d'éclairage,
• un premier circuit logique (C1) conçu pour contrôler le premier convertisseur (P1),
• un deuxième circuit logique (C2) conçu pour relever une valeur de mesure sur un côté secondaire de l'isolation de potentiel et
• une interface à potentiel isolé (J1), au moyen de laquelle le premier circuit logique (C1) et le deuxième circuit logique (C2) sont reliés entre eux, **caractérisé en ce que**
• le premier circuit logique (C1) est conçu pour recevoir, par l'intermédiaire d'une unité de communication (EKE), une instruction numérique et pour la transmettre, par l'intermédiaire de l'interface à potentiel isolé (J1), au deuxième circuit logique (C2) et
• le deuxième circuit logique (C2) comprend un circuit de régulation numérique qui est conçu pour contrôler et cadencer le deuxième convertisseur (P2) sur la base de la valeur de mesure du côté secondaire de l'isolation de potentiel, de façon à ce que la valeur de mesure soit régulée à une valeur correspondant à l'instruction numérique entrée dans le premier circuit logique (C1).

2. Appareil de commande selon la revendication 1, dans lequel le premier circuit logique (C1), le deuxième circuit logique (C2) et l'interface à potentiel isolé (J1) sont intégrés dans un module multi-puce.

3. Appareil de commande selon la revendication 1 ou 2, dans lequel les instructions numériques externes entrées sont des directives de valeurs de gradation.

4. Lampe à LED, plus particulièrement lampe à LED pour le remplacement d'une lampe à incandescence conventionnelle,
comprenant un appareil de commande selon l'une des revendications précédentes.

5. Luminaire, plus particulièrement éclairage de secours,
comprenant un appareil de commande selon l'une des revendications précédentes.
